Europäisches Patentamt

European Patent Office

Office européen des brevets

(19)

(11) EP 0 593 084 B1

# (12) EUROPEAN PATENT SPECIFICATION

(45) Date of publication and mention
of the grant of the patent:
**21.01.1998 Bulletin 1998/04**

(51) Int Cl.6: **F16C 13/00**, D06C 11/00

(21) Application number: **93116737.3**

(22) Date of filing: **15.10.1993**

(54) **Cylinders made of high speed rollers for raising machines, and process for making such rollers**

Aus Hochgeschwindigkeitswalzen gebildete Zylinder für Rauhmaschinen, und Verfahren zur Herstellung

Cylindres formés de rouleaux pour haute vitesse de rotation pour laineuses, et procédé de réalisation

(84) Designated Contracting States:
BE CH DE DK ES FR GB IE IT LI LU NL PT

(30) Priority: 16.10.1992 IT VA920024

(43) Date of publication of application:
20.04.1994 Bulletin 1994/16

(73) Proprietor: **OFFICINA MECCANICA DI CARU
MARCO & C.**
**21010 Cardano al Campo (IT)**

(72) Inventors:
• **Caru', Marco**
**I-21010 Cardano Al Campo (Varese) (IT)**
• **Caru', Sergio**
**I-21010 Cardano Al Campo (Varese) (IT)**

(74) Representative: **Sassi, Romano**
**UFFICIO BREVETTI VARESINO**
**Viale Belforte 89**
**21100 Varese (IT)**

(56) References cited:
EP-A- 0 236 067          CH-A- 666 332
FR-A- 390 925            FR-A- 2 609 063
GB-A- 2 065 734          GB-A- 2 186 662
US-A- 1 720 252

• **DATABASE WPI Section Ch, Week 8411,
Derwent Publications Ltd., London, GB; Class F,
AN 84-065933 & JP-A-59 021 770 (KANAI H) 3
February 1984**

## Description

The present invention relates to a cylinder for raising machines. A cylinder according to the first part of claim 1 is known from the documents GB-A-2 065 734 and US-A-1 720 252.

At the present state of the art many applications are known wherein a number of rollers carried by a flanged cylindrical drum providing rotation around their axes and revolution about the axes of the drum. This is the case of the rollers comprising the cylinders or drums of the raising machines. The known rollers are conventionally made of metal whereby to maximize their mechanical features and this implies a congruous weight. Since, as it is known, the centrifugal force varies with the square of the angular speed and the weight of the roller is among the multiplying factors of the formula giving its intensity, the centrifugal force represents a limitation of the performances of the machine. The centrifugal force, apart from the working loads, which could even act thereagainst, causes an intolerable deflection for the operation of the machine. Since the radius of the cylinder and the diameter of the same rollers provide the irrenounceable nominal features of the machine, it is absolutely necessary to reduce the velocity of the machine and, limitatively, the weights of the revolving rollers. In practice, there is a deflection camber, beyond which, e.g. in a raising machine, the cloth surface to be raised results imperfect, strongly heterogeneous and beyond a certain limit damaged.

E.g., a raising machine cylinder or drum with a diameter of 800 mm, provided with 24 tubular rollers, each with a diameter of 70 mm, 2 m long and having a wall thickness of 5 mm, for a weight of about 20 Kg, including the wire covering, driven at the speed of 100 R.P.M., corresponding to 10,47 rad/sec, determines a camber of 1,03 mm, which represents the tolerated limit, of coarse exceeding that desirable.

The conventional status, taken as reference is expressible by the following demonstrative formula, whose premises are explained thereafter:

$$\omega \sim \sqrt{\frac{f_{MAX} \bullet E \bullet (D_E^{\,4} - D_I^{\,4})}{(D_E^{\,2} - D_I^{\,2}) \bullet P_S + P_G}}$$

wherein:
$\omega$ = angular speed of the cylinder; $\qquad$ $f_{MAX}$ = maximum camber of the cylinder; $\qquad$ E = modulus of elasticity of the roller material; $\qquad$ $D_E$ = outer diameter of the roller; $\qquad$ $D_I$ = inner diameter of the roller; $\qquad$ $P_S$ = specific weight of the roller material; $\qquad$ $P_G$ = weight of the wire coating of the roller.

Taking this demonstrative formula and giving to the parameters therein demonstrative values too, whereby to obtain unitary results, it is possible to use it as a reference as follows:

$$\omega_A \sim \sqrt{\frac{0,015 \bullet 148,1 \bullet (1^4 - 0,86^4)}{(1^2 - 0,86^2) \bullet 3,08 + O,2}} = 1.$$

The invention as claimed is intended to remedy these drawbacks. The inventors with ingenious perception have conceived cylinders for raising machines, having bending loaded rollers, particularly stressed by revolution centrifugal force, according which at least the body of the roller is made of light material such as carbonium fibres, whereby the speed $\omega$ of the cylinder may be increased substantially as follows:

$$\omega_B \sim \sqrt{\frac{f_{MAX_1} \bullet E_2 \bullet (D_{E_1}^{\,4} - D_{I_1}^{\,4})}{(D_{E_1}^{\,2} - D_{I_1}^{\,2}) \cdot P_{S_2} + P_G}} = \sqrt{\frac{0,015 \bullet 87,1 \bullet (1^4 - 0,86^4)}{(1^2 - 0,86^2) \bullet 0,63 + O,2}} = 1,28.$$

In accordance with the present invention, each roller is provided with an outer main surface of concave shape in axial direction substantially corresponding to the tolerated active camber, whereby, at normal operating conditions, the camber of deflection provides a linear setting in the roller. Thus, at tolerable camber, the angular speed $\omega_C$ may be increased, according what follows:

$$\omega_C \sim \sqrt{\frac{f_{MAX_2} \bullet E_2 \bullet (D_{E_2}^{\,4} - D_{I_2}^{\,4})}{(D_{E_2}^{\,2} - D_{I_2}^{\,2}) \cdot P_{S_2} + P_G}} = \sqrt{\frac{0,030 \bullet 87,1 \bullet (0,97^4 - 0,83^4)}{(0,97^2 - 0,83^2) \bullet 0,63 + O,2}} = 1,72.$$

EP 0 593 084 B1

In accordance with a further feature of the present invention, the roller is provided even with a wall of differentiated thickness. It is thicker in the middle, whereby, compared with a conventional roller of the same weight and speed, the deflection camber results lower. Of course, these three arrangements, at the level of a mere roller, not including the common wire coating, may cooperate jointly, whereby a multiplication of individual advantage factors is obtained. In fact, the conventional camber of 1 millimetre, according to the present invention corresponds to linear attitude; or it may be assumed that: an advantage of about the 28% may be provided by a weight reduction, an advantage of 10% may be provided by a central thickening of the body wall of the roller and an advantage of 44% may be had, as an effect of the concave shape of the outer surface of the rollers thus excluding the incidence of the wire coating weight, a multiplication factor of 100% is obtained. The particular process of making the roller, made with resin reinforced with carbon fibres, permit an ample optionality. It is possible to change the number and width of the carbon fibres strands or roving, and changes can be made on all said factors as well as on the modulus of elasticity of the materials and of their composition. With all this the angular speed $\omega_D$ may be increased to:

$$\omega_D \sim \sqrt{\frac{f_{MAX_2} \bullet E_2 \bullet (D_{E_2}^{4} - D_{I_3}^{4})}{(D_{E_2}^{2} - D_{I_3}^{2}) \cdot P_{S_2} + P_G}} = \sqrt{\frac{0,030 \bullet 87,1 \bullet (0,97^4 - 0,77^4)}{(0,97^2 - 0,77^2) \bullet 0,63 + O,2}} = 1,82.$$

One way of carrying out the invention is described in detail below, with reference to the drawings, which illustrate only one specific embodiment, in which:

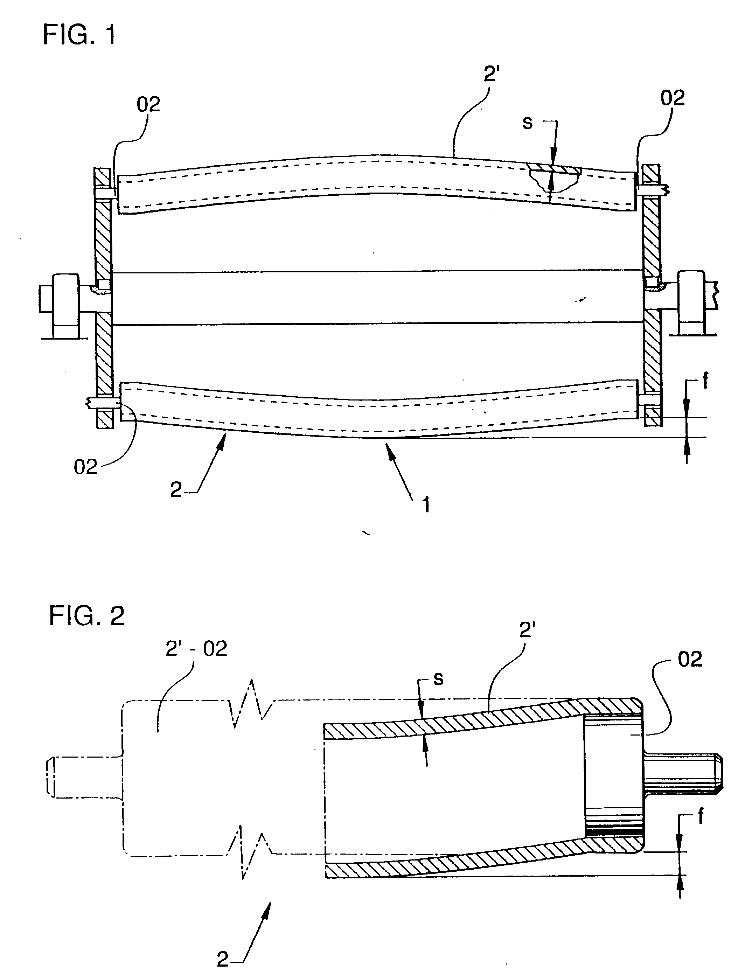

Figure 1 is the schematic, diametrical cross section of the cylinder of a raising machine in movement, showing, duly caricatured, the effect determined by the revolution centrifugal force on a cylindrical conventional roller.

Figure 2 is the longitudinal cross section of a roller, according to one of the features of the present invention, wherein the roller is made of low specific gravity material, such as resin reinforced with carbon fibres; the left half shows, in phantom lines, the roller in stationary condition, while the right half shows, with continuous lines, the same roller in movement, at the highest speed, i.e., that determining the highest tolerable camber f.

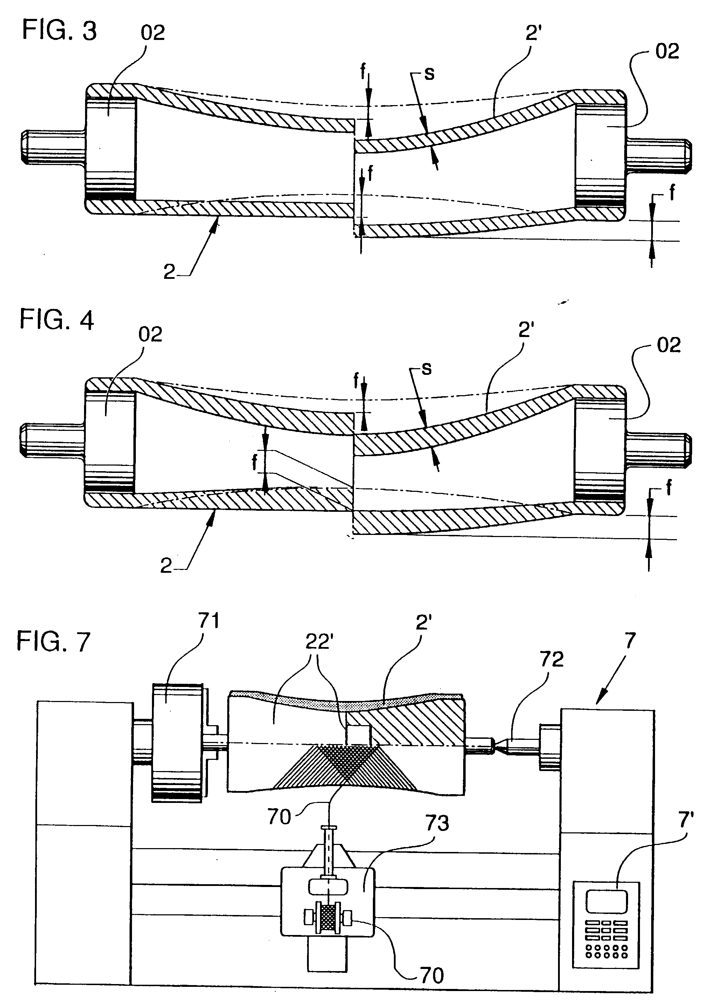

Figure 3 is substantially a repetition for figure 2, but showing a roller, which is of concave shape by a tot corresponding to the maximum tolerated conventional camber. Even this figure is divided in two halves: the left half shows the roller in movement at such a speed to determine the annulment of the negative camber -f, while the right half shows the roller in movement at the maximum speed, i.e. that determining the highest tolerable countercamber f, i.e., that which, in addition to cancel the negative camber, determines the maximum tolerable positive camber; whereas the stationary condition of the roller is shown in phantom lines.

Figure 4 is substantially a repetition of figures 2 and 3, but wherein the thickness of the roller wall is increased, inwardly, in the middle part of the roller body. Even this figure, is divided in two halves: the left half shows the roller in movement at such a speed to determine the annulment of the negative camber -f, while the right half shows the roller in movement at the maximum speed, i.e,. that determining the highest tolerable countercamber f, i.e., that which, in addition to cancel the negative camber, determines the maximum tolerable positive camber; whereas the stationary condition of the roller is shown in phantom lines.

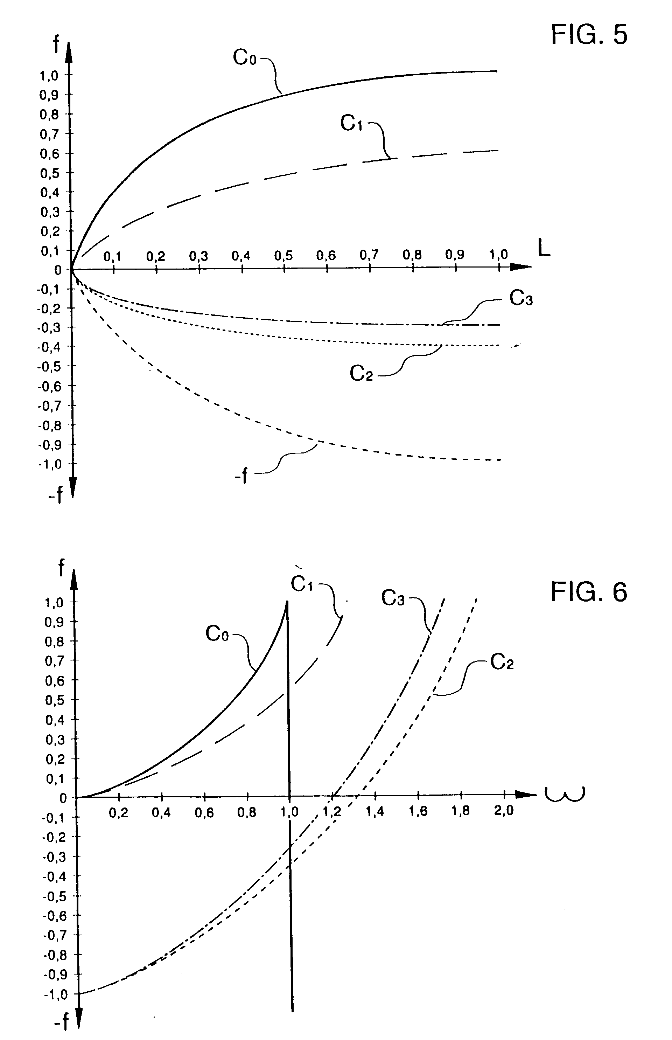

Figure 5 is a diagram showing the variation of the camber f, with respect to various points along the roller length L, with respect to: i) a steel conventional roller $C_0$, acting as reference; ii) a roller $C_1$ with conventional structure but according to the present invention made of fibre reinforced plastic material; iii) a roller $C_2$ with differentiated thickness and diameter; iv) a roller $C_3$ with differentiated diameter and constant thickness, wherein the other conditions of nominal dimensions and weight, of the rollers according to the present invention, are quite the same.

Figure 6 is a diagram showing the variation of the camber f, in function of the angular speed $\omega$ with respect to i) a steel conventional roller $C_0$, acting as reference; ii) a roller $C_1$, with conventional structure, but according to the present invention made of fibre reinforced plastic material; iii) a roller $C_2$ with differentiated thickness and diameter; iv) a roller $C_3$ with differentiated diameter and constant thickness, wherein the other conditions, of nominal dimensions and weight of the rollers according to the present invention, are quite the same.

Figure 7 is the schematic, symbolic view, of a programmable N.C. device, per se known, used according to the present invention to distribute, on a concave core, the carbon fibres roving, providing stratifications of increasing thickness, toward the middle of the roller. The device is shown in the attitude of depositing differentiated layers of roving. The upper half of the roller is shown in cross section, from which it may be noted that the mold, for reasons of core removal, is divided into two longitudinal halves, in correspondence of the concave shape.

Referring to the figures of the drawings, conventionally, a cylinder 1 of a raising machine, not shown, has, e.g., a diameter of 800 mm and is provided with twentyfour tubular rollers 2, with a diameter of 70 mm, 2 m long and having a wall thickness of 5 mm, for a weight of Kg 20,6, including the wire covering, not shown. Each roller 2 is comprised by a pair of hubs 02 and by a tubular body 2', whose wall thickness is s. Rotation of cylinder at a speed of 100 R.P.M., corresponding to 10,47 radiants/sec, determines a camber f of 1,03 mm, which represents the tolerated limit, of coarse

3

EP 0 593 084 B1

exceeding that desirable. According to the present invention (figure 2) the weight of the roller 2 is reduced to Kg 7,4, including the wire covering, not shown. Wherein account is taken of the weight of the rollers 2, without the wire coating, not shown, are of Kg 16,6 and 3,4, with a ratio of about 5. Even by a rough calculation it may be evident that the speed of the cylinder 1 may be increased by 60%, by using, in the provision of tubular body 2', a valuable material, whereas, using a current material the increase is about 30%.

Starting from the particular formulae expressing the various parameters as follows:

**I Formula**

a) Effective:

$$F_C = f_{MAX} \bullet E \bullet I \bullet \frac{384}{5 \bullet L^3}$$

b) demonstrative:

$$F_C \sim f_{MAX} \bullet E \bullet I;$$

wherein:

$f_{MAX}$ = maximum camber; $\quad$ $F_C$ = centrifugal force; $\quad$ $E$ = modulus of elasticity; $\quad$ $I$ = moment of inertia; $\frac{384}{5 \cdot L^3}$ = constant.

**II Formula**

a) Effective:

$$\omega = \sqrt{\frac{F_C}{P_T} \bullet \frac{2}{g \bullet D_B}}$$

b) demonstrative:

$$\omega \sim \sqrt{\frac{F_C}{P_T}}$$

wherein:

$F_C$ = centrifugal force; $\quad$ $P_T$ = total weight; $\quad$ $\frac{2}{g \bullet D_B}$ = constant.

**III Formula**

a) Effective:

$$I = 0,0491(D_E^4 - D_I^4);$$

b) demonstrative:

$$I \sim (D_E^4 - D_I^4);$$

wherein:

$D_E$ = outer diameter; $\quad$ $D_I$ = inner diameter; $\quad$ $0,0491$ = constant

4

### IV Formula

Demonstrative Effect-

$$P_T = P_C + P_G;$$

wherein:

$P_T$ = total weight;        $P_C$ = weight of the roller;        $P_G$ = weight of the wire coating.

### V Formula

a) Effective

$$P_C = (D_E{}^2 - D_I{}^2) \bullet P_S \bullet \frac{L \bullet \pi}{4}$$

b) demonstrative

$$P_C \sim (D_E{}^2 - D_I{}^2) \bullet P_S;$$

wherein:

$P_S$ = specific gravity;        $D_E$ = outer diameter;        $D_I$ = inner diameter;        $\frac{L \bullet \pi}{4}$ = constant

the following formula is obtained:

### VI demonstrative final formula:

$$\omega \sim \sqrt{\frac{f_{MAX} \bullet E \bullet (D_E{}^4 - D_I{}^4)}{(D_E{}^2 - D_I{}^2) \bullet P_S + P_G}};$$

wherein:

$\omega$ = angular speed;        $f_{MAX}$ = maximum camber;        $E$ = modulus of elasticity;        $D_E$ = outer diameter;        $D_I$ = inner diameter;        $P_S$ = specific weight; $P_G$ = weight of the wire coating;
from which:

$$\omega^2 \sim \frac{f_{MAX} \bullet E \bullet (D_E{}^4 - D_I{}^4)}{(D_E{}^2 - D_I{}^2) \bullet P_S + P_G};$$

$$f_{MAX} \sim \frac{\omega^2 \bullet ((D_E{}^2 - D_I{}^2) \bullet P_S + P_G)}{E \bullet (D_E{}^4 - D_I{}^4)};$$

and putting: $\omega^2 = 1$, we have:

$$f_{MAX} \sim \frac{(D_E{}^2 - D_I{}^2) \bullet P_S + P_G}{E \bullet (D_E{}^4 - D_I{}^4)},$$

while
removing all the constants we obtain:

$$f_{MAX} \sim \frac{(D_E^2 - D_I^2)}{(D_E^4 - D_I^4)} = \frac{load}{strength}$$

Considering the following cases:

Conventional (reference):

A) Roller of steel - Constant diameter - Constant thickness.

According to the present invention (three cases):

B) Composite roller: Constant diameter, Constant thickness;

C) Composite roller, variable diameter, Constant thickness;

D) Composite roller: variable diameter, variable thickness.

With the following TABLE a paradigm of various rollers and features is given.

TABLE

| SYMBOL | RATIO | VALUE | DESCRIPTION | CONDITION | | | |
|---|---|---|---|---|---|---|---|
| | | | | A | B | C | D |
| $D_{E_1}$ | 1 | 1 | outer diameter | X | X | | |
| $D_{E_2}$ | $D_{E_1} \cdot 0,97$ | 0,97 | outer diameter | | | X | X |
| $D_{I_1}$ | $D_{E_1} \cdot 0,86$ | 0,86 | inner diameter | X | X | | |
| $D_{I_2}$ | $D_{E_1} \cdot 0,83$ | 0,83 | inner diameter | | | X | |
| $D_{I_3}$ | $D_{E_1} \cdot 0,77$ | 0,77 | inner diameter | | | | X |
| $f_{MAX_1}$ | $\dfrac{D_{E_1} - D_{E_2}}{2}$ | 0,015 | maximum camber | X | X | | |
| $f_{MAX_2}$ | $f_{MAX_1} + f_{NEG}$ | 0,030 | maximum camber | | | X | X |
| $f_{NEG}$ | $f_{MAX_1}$ | 0,015 | negative camber | | | X | X |
| $E_1$ | 148,1 | 148,1 | steel modulus elasticity | X | | | |
| $E_2$ | $E_1/1.7$ | 87,1 | idem composite material | | X | X | X |
| $P_{S_1}$ | 3,08 | 3,08 | steel specific gravity | X | | | |
| $P_{S_2}$ | $P_{S_1}/4,9$ | 0,63 | composite specific gravity | | X | X | X |
| $P_G$ | $\dfrac{(D_{E_1}^2 - D_{I_1}^2) \cdot P_{S_1}}{4}$ | 0,2 | wire coating weight | X | X | X | X |

Comment:

A) Roller of steel - Constant diameter - Constant thickness

E.g., a cylinder with a diameter of 800 mm, provided with 24 tubular rollers, with a diameter of 70 mm, 2 m long and having a wall thickness of 5 mm, for a weight of about 20 Kg including the wire covering, driven at the speed of 100 R.P.M., corresponding to 10,47 radiants/sec, determines a camber of 1,03 mm, which represents the tolerated limit, of coarse exceeding that desirable. The conventional status, taken as reference, is expressible by the following demonstrative formula:

$$\omega_A \sim \sqrt{\frac{F_{MAX_1} \bullet E_1 \bullet (D_{E_1}^4 - D_{I_1}^4)}{(D_{E_1}^2 - D_{I_1}^2) \bullet P_{S_1} + P_G}}$$

wherein:

$\omega$ = angular speed;    $f_{MAX}$ = maximum camber;    E = modulus of elasticity;    $D_E$ = outer diameter;    $D_I$ = inner diameter;    $P_S$ = specific gravity;    $P_G$ = weight of the wire coating.

Taking this demonstrative formula and giving to its parameters a certain demonstrative value, adapted to provide unitary results, a reference may be obtained as follows:

$$= \sqrt{\frac{0{,}015 \bullet 148{,}1 \bullet (1^4 - 0{,}86^4)}{(1^2 - 0{,}86^2) \bullet 3{,}08 + O{,}2}} = 1$$

## B) Composite roller-Constant diameter-Constant thickness (fig.2)

According to the present invention, at least the body 2' of the roller 2, is made of light material, such as resin reinforced with carbon fibres, whereby the angular speed $\omega$ of the cylinder 1 may be increased substantially as follows:

$$\omega_B \sim \sqrt{\frac{f_{MAX_1} \bullet E_2 \bullet (D_{E_1}^4 - D_{I_1}^4)}{(D_{E_1}^2 - D_{I_1}^2) \cdot P_{S_2} + P_G}} = \sqrt{\frac{0{,}015 \bullet 87{,}1 \bullet (1^4 - 0{,}86^4)}{(1^2 - 0{,}86^2) \bullet 0{,}63 + O{,}2}} = 1{,}28$$

## C) Composite roller-variable diameter-Constant thickness (fig. 3)

In accordance with another feature of the present invention the roller 2 is provided with the outer main surface, having a concave shape in axial direction substantially corresponding to the tolerated active camber f, whereby, at normal operating conditions the camber f of deflection determines the roller 2 to gain a linear attitude. whereby, at tolerable camber, the angular speed $\omega_C$ may be increased according what follows:

$$\omega_C \sim \sqrt{\frac{f_{MAX_2} \bullet E_2 \bullet (D_{E_2}^4 - D_{I_2}^4)}{(D_{E_2}^2 - D_{I_2}^2) \bullet P_{S_2} + P_G}} = \sqrt{\frac{0{,}030 \bullet 87{,}1 \bullet (0{,}97^4 - 0{,}83^4)}{(0{,}97^2 - 0{,}83^2) \bullet 0{,}63 + O{,}2}} = 1{,}72$$

## D) Composite roller-variable diameter-variable thickness (fig.4)

In accordance with a further feature of the present invention, the roller 2 is provided too with a differentiated wall thickness s, thicker in the middle, whereby compared with a conventional roller of the same weight and angular speed $\omega$, the camber f of deflection results to be lower. Of course, the three arrangements at level of mere roller 2, not including the common wire coating, may cooperate jointly, whereby a multiplication of individual advantage factors is obtained. In fact, the conventional camber of 1 millimetre corresponds to linear attitude according to the present invention or it may be assumed that an advantage of about the 28% may be provided by a weight reduction, an advantage of 10% may be provided by a central thickening of the body wall of the roller reduction and an advantage of 44% may be had, as an effect of the negative camber or strangulation; thus a multiplication factor higher than 100% may be obtained. The particular process of making the roller, made with resin reinforced with carbon fibres, allows an ample optionality. It is possible to change the number and width of the carbon fibres strands or roving 9. Changes can be made on all said factors, as well as on the modulus of elasticity of the material and of its composition, whereby the angular speed $\omega_D$ may be increased to:

$$\omega_D \sim \sqrt{\frac{f_{MAX_2} \bullet E_2 \bullet (D_{E_2}^4 - D_{I_3}^4)}{(D_{E_2}^2 - D_{I_3}^2) \cdot P_{S_2} + P_G}} = \sqrt{\frac{0{,}030 \bullet 87{,}1 \bullet (0{,}97^4 - 0{,}77^4)}{(0{,}97^2 - 0{,}77^2) \bullet 0{,}63 + O{,}2}} = 1{,}82$$

Referring now to figure 7, a programmable N.C. device 7, per se known, is used, according to the present invention,

to distribute, on a concave core 22', a carbon fibre roving 70, providing stratifications of increasing thickness, toward the middle of the roller 2'. The device 7 has substantially the attitude of a lathe, with a shaft 71, a stock 72, and a chariot 73, and it is shown in the attitude of depositing the roving 70 by differentiated layers. The upper half of the roller 2', shown in cross section, explains that the mold, 22', for reasons of core removal from the tubular body 2', is divided into two longitudinal halves, in correspondence of the concave shape.

## Claims

1. Cylinder (1) for raising machines having a plurality of rollers (2) circumferencially arranged around a common rotation axis with the centre lines of the rollers (2) being parallel to said rotation axis, said rollers, being loaded by centrifugal force, caused by rotation of said cylinder (1) with an angular speed (w) around said rotation axis, and said rollers (2) comprising a tubelike body (2') whose operation is determined by the following formula:

$$W \sim \sqrt{\frac{f_{MAX} \bullet E \bullet (D_E{}^4 - D_I{}^4)}{(D_E{}^2 - D_I{}^2) \bullet P_S + P_G}} \, ,$$

   wherein:
   W = angular speed of the cylinder; $f_{MAX}$ = maximum bending of the roller; E = modulus elasticity of the roller material; $D_E$ = outer diameter of the roller; $D_I$ = inner diameter of the roller; $P_S$ = specific weight of the roller mater; $P_G$ = weight of the wire coating of the roller;
   characterized in that the body (2') of the roller is made of particularly light plastic material reinforced with fibers, having a ratio: modulus of elasticity E/specific gravity $P_S$, higher than that of steel and in that said body (2') has an outer surface of concave shape in axial direction and a wall thickness $D_E$ - $D_I$ higher in the middle and lower at the ends.

2. Cylinder as claimed in claim 1, characterized in that the material of the body (2') is a resin reinforced with carbon fibers.

3. Process of making a cylinder as claimed in claim 2, characterized in that for the provision of the rollers a programmable N.C. device (71, 72), per se known, is programmed and used to distribute, on a core (22'), having a concave outer surface in axial direction the carbon fibre roving (70), providing stratifications of increasing thickness, toward the middle of the roller (2), said core (22'), for reasons of core removal, being divided into two longitudinal halves, in correspondence of the concave shape.

4. Raising machine characterized in that it includes a cylinder as claimed in claim 1 or 2.

## Patentansprüche

1. Zylinder (1) für Aufrauhmaschinen, ausgestattet mit einer Mehrzahl von kreisförmig um eine gemeinsame Achse angeordneten Rollen (2) wobei die Rollenmittellinien parallel zu der genannten Achse angelegt sind, wobei die genannten Rollen der Zentrifugalkraft unterworfen sind die durch die Rotation des genannten Zylinders (1) mit der Winkelgeschwindigkeit (w) um die genannte Drehachse erzeugt wird, und die besagten Rollen (2) aus einem Rohrförmigen Körper (2) bestehen dessen Funktionsweise duroh die folgende Formel bestimmt wird:

$$w \approx \sqrt{\frac{f_{MAX} \bullet E \bullet (D_E{}^4 - D_I{}^4)}{(D_E{}^2 - D_I{}^2) \bullet P_S + P_G}} \, ,$$

   es bedeuten:
   w = die Zylinder Winkelgesehwindigkeit; $f_{MAX}$ = maximale Rollendurchbiegung; E = Elastizitätmodul des Rollenwerkstoffes; $D_E$ = äusserer Rollen Durchmesser; $D_I$ = innerer Rollen Durchmesser; $P_S$ = spezifisches Gewicht des Rollenwerkstoffes; $P_G$ = Gewicht des Drahtbelages der Roller;
   dadurch gekennzeichnet dass der Körper (2') aus einem besonders leichten, mit Fasern verstärkten, plastischen

EP 0 593 084 B1

Material hergestellt ist, mit einem Elastizitätmodul E/ spezifisches Gewicht Ps Verhältnis das grösser als dem des Stahls ist, und/oder besagter Körper (2') eine äussere, in Achsenrichtung, konkave Fläche aufweist und/oder eine Wanddicke $D_E$ - $D_I$ die in der Mitte grösser ist und kleiner an den Enden.

2. Zylinder nach Anspruch 1, dadurch gekennzeichnet dass das Material des Körpers (2') aus Harz besteht das mit Karbonfasern verstärkt ist.

3. Herstellungsverfahren eines Zylinders nach den Ansprüchen 1 bis 4, dadurch gekennzeichnet dass zur Herstellung der Rollen, man eine an sich bekannte, programmierbare N.C. Vorrichtung (71, 72) benützt, die programmiert und gebraucht wird, Roving (70) aus Karbonfiber auf einen Kern (22') mit konkaver äusseren Fläche in Achsenrichtung Schichten mit zunehmender Dicke, in Richtung des Rollenzentrums (2), aufzutragen, wobei genannter Kern (22') aus Extraktionsgründen in zwei longitudinalen Hälften, in Korrespondenz mit der konkaven Form, geteilt ist.

4. Aufrauhmaschine, dadurch gekennzeichnet dass diese einen Zylinder nach den Ansprüchen 1 oder 2 aufweist.

**Revendications**

1. Cylindre (1) pour machines laineuses ayant un ensemble de rouleaux (2) disposés circonférentiellement autour d'un axe de rotation commun, avec la ligne médiane des rouleaux (2) qui est parallèle à ledit axe de rotation, lesdits rouleaux étant soumis à une force centrifuge, causée par la rotation dudit cylindre (1) avec une vitesse angulaire (w) autour dudit axe de rotation, et lesdits rouleaux (2) comprenant un corps (2) tubulaire, le fonctionnement duquel est déterminé par la formule suivante:

$$w \approx \sqrt{\frac{f_{MAX} \bullet E \bullet (D_E{}^4 - D_I{}^4)}{(D_E{}^2 - D_I{}^2) \bullet P_S + P_G}}$$

où:
w = vitesse angulaire du cylindre; $f_{MAX}$ = flexion maximale du rouleau; E = module d'élasticité du matériel du rouleau; $D_E$ = diamètre extérieur du rouleau; $D_I$ = diamètre intérieur du rouleau; $P_S$ = poids spécifique du matériel du rouleau; $P_G$ = poids du revêtement de fil du rouleau;
caractérisé en ce que le corps (2') du rouleau est constitué de matérlel plastique particulièrement léger, renforcé avec fibres, ayant un rapport: module d'élasticité E/poids spécifique $P_S$, plus grand que celui de l'acier et/ou en ce que ledit corps (2') comporte une surface extérieure concave en direction axiale et/ou une épaisseur de paroi $D_E$ - $D_I$ plus grande dans le milieu et inférieure aux extrémités.

2. Cylindre, selon la revendication 1, caractérisé en ce que le matériel du corps (2') est constitué de résine renforcée avec des fibres de carbone.

3. Procédé de fabrication d'un cylindre selon les revendications de 1 à 4, caractérisé en ce que pour la production des rouleaux, un dispositif (71, 72) à C.N. programmable, en soi-même connu, est programmé et utilisé pour distribuer, sur une âme (22') ayant une surface exteriéure concave en direction axiale, le rowing (70) en fibre de carbone, pourvoyant des stratifications d'épaisseur croissante, vers le centre du rouleau (2), ladite âme (22'), pour des raisons d'extraction, étant divisée en deux moitiés longitudinales, en correspondance de sa concavité.

4. Machine laineuse, caractérisée en ce qu'elle inclut un cylindre selon la revendication 1 ou 2.

9

FIG. 1

FIG. 2

FIG. 3

FIG. 4

FIG. 7

FIG. 5

FIG. 6